# EUROPEAN PATENT APPLICATION

(11) **EP 4 485 483 A1**
(43) Date of publication of application: **01.01.2025**
(21) Application number: 23759627.5
(22) Date of filing: 03.02.2023
(51) Int. Cl.: H01B 1/08, H01B 1/06, H01M 4/13, H01M 4/62, H01M 10/052, H01M 10/0562

(54) **SOLID ELECTROLYTE, ACTIVE MATERIAL LAYER, ELECTROLYTE LAYER, AND SECONDARY BATTERY**

(30) Priority: 25.02.2022 JP 2022028467
(71) Applicant: Canon Kabushiki Kaisha, Ohta-ku Tokyo 146-8501 (JP)
(72) Inventor: MASADA, Yohei, Tokyo 146-8501 (JP); AOTANI, Takaharu, Tokyo 146-8501 (JP); DOGUCHI, Kentaro, Tokyo 146-8501 (JP)
(74) Representative: Canon Europe Limited
(86) International application number: PCT/JP2023/003493
(87) International publication number: WO 2023/162621

(57) **Abstract**

A solid electrolyte contains a borate containing Li, an element R selected from a group including Yb, Er, Tm, and La, and an element M1 selected from a group including Mg, Sr, and Ca.

## Description

### TECHNICAL FIELD

The present invention relates to a solid electrolyte, and an active material layer, an electrolyte layer, and a secondary battery containing the electrolyte.

### BACKGROUND

All-solid-state secondary batteries containing solid electrolytes can have higher heat resistance and improved safety because electrolytes do not leak or volatilize. Thus, it is possible to reduce module costs and increase energy densities.

As one of such solid electrolytes, a sulfide-based solid electrolyte has been reported. However, the sulfide-based solid electrolyte has a problem in terms of workability because a sulfide is used as a raw material for their production. Thus, oxide-based solid electrolytes have been reported as non-sulfide-based solid electrolytes.

As Li-containing solid electrolytes, NASICON-type Li₁₊ₓAlₓTi₂₋ₓ(PO₄)₃ (LATP), perovskite-type Li₃₊ₓLa_{2/3-x}TiO₃ (LLT), and garnet-type cubic Li₇La₃Zr₂O₁₂ (LLZ) have been reported. As Na-containing solid electrolytes, P"-alumina-type Na₂O·(5-7)Al₂O₃ and NASICON-type Na₃Zr₂Si₂PO₁₂ have been reported. However, these solid electrolytes have the following problems: usable cathode materials are limited, and sintering at a high temperature of higher than 1,000°C is required in order to improve conductivity by bringing interfaces between solid electrolytes and between a solid electrolyte and an active material into close contact with each other. In particular, sintering at a high temperature may lead to the formation of a high-resistance phase between solid electrolytes and at the interface between a solid electrolyte and an active material, limiting the improvement of ionic conductivity.

For these reasons, attempts have recently been made to lower the sintering temperature. Patent Literature 1 discloses a lithium borate-containing solid electrolyte, such as Li₂₊ₓC₁₋ₓBₓO₃, and the post baking temperature can be reduced to about 900°C.

Patent Literature 2 discloses that the sintering temperature at the time of the formation of a solid electrolyte can be reduced to 650°C to 800°C by mixing an LLZ-based oxide with Li₃BO₃.

### Citation List

### Patent Literature

PTL 1: Japanese Patent Laid-Open No. 5-54712
PTL 2: Japanese Patent Laid-Open No. 2013-37992

### SUMMARY

### Technical Problem

In the cases of secondary batteries containing the respective solid electrolytes disclosed in Patent Literature 1 and Patent Literature 2, low post baking temperatures were used, and high-resistance phases were less likely to be formed as intermediate layers at interfaces between the solid electrolytes and other materials. However, regions occupied by the respective solid electrolytes have an ionic conductivity σ_{SE} of less than 1 × 10⁻⁷ S/cm at room temperature, in some cases. There has been a demand for an oxide-based solid electrolyte having an enhanced ionic conductivity.

The present invention aims to provide a solid electrolyte that can be produced by sintering at a low temperature and that has a high ionic conductivity, and an electrolyte layer, an active material layer, and a secondary battery each containing the solid electrolyte. Solution to Problem

A solid electrolyte according to an embodiment of the present invention contains an oxide represented by the general formula Li₆₊ₓR₁₋ₓM1ₓ(BO₃)₃. In the formula, R is a rare-earth element selected from a group including Yb, Er, Tm, and La, M1 is a divalent element selected from a group including Mg, Sr, and Ca, and x is a real number satisfying 0 < x < 1.

A solid electrolyte according to an embodiment of the present invention contains a borate containing Li, an element R selected from a group including Yb, Er, Tm, and La, and an element M1 selected from a group including Mg, Sr, and Ca.

### Advantageous Effects of Invention

According to the present invention, it is possible to provide a solid electrolyte that can be produced by sintering at a low temperature and that has high ionic conductivity. In addition, according to the present invention, it is possible to provide an electrolyte layer, an active material layer, and a secondary battery each containing the solid electrolyte.

### Brief Description of Drawings

[Fig. 1] Fig. 1 is a graph illustrating the relationship between the ionic conductivity and the value of the composition x (x1 + x2) of a substitution element M1 of each of solid electrolytes according to Examples 1 to 11 included in a first embodiment.
[Fig. 2] Fig. 2 illustrates X-ray diffraction curves of solid electrolytes according to Examples 1 to 11.
[Fig. 3] Fig. 3 illustrates X-ray diffraction curves of solid electrolytes according to Examples 3 to 5.
[Fig. 4A] Fig. 4A is a schematic cross-sectional view of a secondary battery according to a second embodiment.
[Fig. 4B] Fig. 4B illustrates the anode and the electrolyte layer of the secondary battery according to the second embodiment.
[Fig. 4C] Fig. 4C illustrates the anode active material layer of the secondary battery according to the second embodiment.
[Fig. 4D] Fig. 4D is a partially enlarged view of the electrolyte layer of the secondary battery according to the second embodiment.

### DETAILED DESCRIPTION

Preferred embodiments of the present invention are described in detail below with reference to the drawings.

### (First Embodiment)

A solid electrolyte according to an embodiment contains an oxide represented by the general formula Li₆₊ₓR₁₋ₓM1ₓ(BO₃)₃. In the formula, R is a rare-earth element selected from a group including Yb, Er, Tm, and La, M1 is a divalent element selected from a group including Mg, Sr, and Ca, and x is a real number satisfying 0 < x < 1.

In the formula, when R includes at least two elements selected from the group including the trivalent elements Yb, Er, Tm, and La, a combination of the elements selected from the group including Yb, Er, Tm, and La may be used, and a combination of these elements with other trivalent elements having an ionic radius close to these elements may also be used.

In other words, the solid electrolyte according to the present embodiment contains an oxide represented by the general formula Li₆₊ₓR₁₋ₓM1ₓ(BO₃)₃. The inventors of the present application speculate the following reason for the improvement of ionic conductivity in solid electrolytes having oxides represented by the general formula Li₆₊ₓR₁₋ₓM1ₓ(BO₃)₃.

When the rare-earth elements Yb, Er, Tm, and La are partially replaced with the divalent element M1, the charge balance is adjusted in such a manner that the crystal as a whole is neutral, thereby resulting in a state in which Li⁺ ions are present in excess in the crystal lattice. The state in which Li⁺ ions are present in excess is expressed in other words as a state in which Li⁺ ions are packed into the crystal lattice.

The state in which Li⁺ ions are packed into the crystal lattice is called interstitial ions. The ionic conductivity is thought to be improved because the phenomenon in which the interstitial Li⁺ ions are pushed and moved one after another occurs in a concerted manner. In other words, the ionic conductivity is thought to be improved because the phenomenon of migration of Li⁺ ions using Li+ occupied sites occurs in a concerted manner.

In other words, the solid electrolyte of the present embodiment is a solid electrolyte containing a borate that contains Li, an element R selected from a group including Yb, Er, Tm, and La, and an element M1 selected from a group including Mg. M1 is a divalent element. M1 is at least one element selected from a group including Mg. As an element that can substitute for the trivalent element R including Yb, Er, Tm, and La, an element having an ionic radius close to the trivalent element R is likely to substitute for it, and specifically, Mg²⁺ is a potential candidate.

The solid electrolyte of the present embodiment preferably has a monoclinic crystal structure.

In an X-ray diffraction analysis (hereinafter, referred to as "XRD") by a 2θ method using a K-alpha emission line in copper, a diffraction peak at a diffraction angle 2θ of about 28° changes in accordance with the composition of the solid electrolyte.

In the solid electrolyte of the present embodiment, in which R of the oxide represented by the general formula Li₆₊ₓR₁₋ₓM1ₓ(BO₃)₃ includes Yb, the solid electrolyte preferably has a diffraction peak in the range of 2θ = 28.0° or more and 28.1 ° or less in XRD using the K-alpha emission line in copper. In the above general formula, x corresponds to the amount of the substitution element M1 that substitutes for the element R, and 0 < x < 1 is used. As the substitution amount x, a value of 0.01 or more and 0.30 or less is preferably used. As more preferred x, a value of 0.01 or more and 0.10 or less is used.

The reasons why the above range of x is preferred are inferred as follows: At a value of x of less than 0.01, a sufficient structural change does not occur because of a small amount of element R replaced, and Li ions are not sufficiently supplied between the lattices, resulting in a failure to improve the ionic conductivity. A value of x of more than 0.30 results in an excessively large amount of substitution element M1. Thus, the excess element M1, which does not contribute to substitution for the element R in the crystal, contributes as an inhibition component for ionic conduction rather than the substitution effect in the crystal.

In XRD using the K-alpha emission line in copper, the position of a diffraction peak at about 2θ = 28° can be controlled by adjusting the value of x in the general formula or changing the element represented by M1.

A method for producing the solid electrolyte of the present embodiment will be described below.

The method for producing a solid electrolyte of the present embodiment includes a post baking step of heating Li, R, and M1, which are elements constituting a solid electrolyte containing an oxide represented by the general formula Li₆₊ₓR₁₋ₓM1ₓ(BO₃)₃, or oxides thereof in an oxygen-containing atmosphere (where in the formula, R is at least one or two elements selected from a group including rare-earth elements Yb, Er, Tm, and La, and M1 is a divalent element).

The method for producing a solid electrolyte of the present embodiment can include a prebaking step of performing heat treatment at a temperature lower than the melting point of the oxides to perform solid-phase synthesis of the oxide represented by the above general formula, and a step of densifying the resulting oxide by heat treatment.

### [Method for Producing Solid Electrolyte]

The method, including the prebaking step and the post baking, for producing a solid electrolyte of the present embodiment will be described in detail below.

### <Prebaking Step>

In the prebaking step, reagent-grade raw materials, such as Li₃BO₃, H₃BO₃, Yb₂O₃, Er₂O₃, Tm₂O₃, MgO, and La₂O₃, are weighed with reference to a predetermined stoichiometric ratio as an index and mixed together to form Li₆₊ₓR₁₋ₓM1ₓ(BO₃)₃. Here, R is at least one or two elements selected from a group including rare-earth elements Yb, Er, Tm, and La, and M1 is a divalent element.

As a device used for mixing, a mixer such as a ball mill can be used, in addition to a mortar and pestle.

After a mixed powder of the above raw materials is prepared by the mixing treatment, the resulting mixed powder is pressure-molded into pellets. Here, as the pressure-molding method, a known pressure-molding method, such as a cold uniaxial molding method or a cold isostatic pressure molding method, can be used. As the conditions for pressure molding in the prebaking step, the pressure can be, but is not particularly limited to, 100 to 300 MPa, for example.

The resulting pellets are prebaked at 500°C to 800°C with, for example, an atmospheric post baking apparatus to perform solid-phase synthesis. The time of the prebaking step can be, but is not particularly limited to, for example, about 700 to 750 minutes (such as, 720 minutes).

The resulting prebaked body is the oxide represented by the general formula Li₆₊ₓR₁₋ₓM1ₓ(BO₃)₃. The pre-sintered body can be ground with, for example, a mortar and pestle, to prepare a prebaked powder.

### <Particle Pulverization Step>

A particle pulverization step may be added between the prebaking step and the post baking step described below. In this particle pulverization step, the pre-sintered body is reduced in particle size and amorphized. This facilitates a reduction in sintering temperature in the post baking step and the coalescence of grain boundaries. For pulverizing the particles, a ball mill, a planetary ball mill, a paint shaker, a homogenizer, an ultrasonic homogenizer, or the like may be preferably used. The pulverization step may be performed in a wet or dry process. In the case of the wet process, an alcohol, such as ethanol, propanol, or isopropanol, may be preferably used as a solvent. After pulverization, the particles are heated sufficiently to remove the solvent.

### <Post Baking Step>

In the post baking step, at least one selected from a group including the prebaked body prepared in the prebaking step and the prebaked body is subjected to pressure molding and post baking to prepare a dense sintered body.

The pressure molding and the post baking may be performed simultaneously by, for example, discharge plasma sintering or hot pressing. Alternatively, after pellets are produced by cold uniaxial molding, post baking may be performed in an air atmosphere, for example. As the conditions for pressure molding in the post baking, the pressure can be, but is not particularly limited to, 100 to 300 MPa, for example.

The post baking temperature is preferably 800°C or lower, more preferably 700°C or lower, and still more preferably 680°C or lower.

The time of the post baking step can be appropriately changed in accordance with, for example, the temperature of the post baking. For example, 700 to 750 minutes are used. The cooling method in the post baking step is not particularly limited. Cooling slower than natural cooling may also be used.

A method for measuring physical properties according to the present disclosure will be described below.

### · Identification of R and M

When the collected sample is not a mixture with other materials, after the collected sample is treated into a solution, the composition ratio of the sample can be identified using, for example, inductively coupled high frequency plasma atomic emission spectroscopy (ICP-AES) or a wavelength dispersive X-ray fluorescence spectrometer (WDXRF). WDXRF may also be referred to as WDX.

When there is a high probability that the collected sample is a mixture, a scanning analyzer that can provide elemental mapping images, such as an X-ray photoelectron spectrometer (XPS, ESCA) or a scanning electron microscope equipped with an energy dispersive X-ray fluorescence analyzer (EDXRF), can be used. Hereinafter, the scanning electron microscope equipped with the energy dispersive X-ray fluorescence spectrometer (EDXRF) may be abbreviated as SEM/EDX. When there is a high probability that the collected sample is a mixture, the crystal structure may be identified using a transmission electron microscope equipped with an electron beam diffraction function (TEM-ED). EDXRF may also be referred to as EDX.

ICP-AES and XPS are used in order to precisely determine the composition ratio of Li, which is a light element, to other elements with higher atomic numbers, such as B, O, Zr, and rare-earth elements.

When the collected sample is a mixture, pretreatment is used to selectively remove a non-target portion for analysis by a physical removal process, such as dicing or ion beam processing, chemical removal, such as dry etching or wet etching, or a combination thereof. For the pretreatment, washing, degreasing, sectioning, grinding, pelletizing, or the like may be used.

With regard to a standard sample, an S-4800 manufactured by Hitachi High-Technologies Corporation can be used as an analyzer for SEM/EDX.

### · Measurement of X-Ray Diffraction Peak

A RINT-2100 manufactured by Rigaku Corporation is used for X-ray diffraction analysis of solid electrolytes.

A powder prepared by grinding a solid electrolyte with a mortar and pestle is subjected to X-ray diffraction analysis using characteristic X-rays of CuKα. The temperature is room temperature, the analysis range is 10° to 70°, the step is 0.016°, and the scan speed is 0.5 steps/second.

### (Second Embodiment)

### <Structure of Secondary Battery>

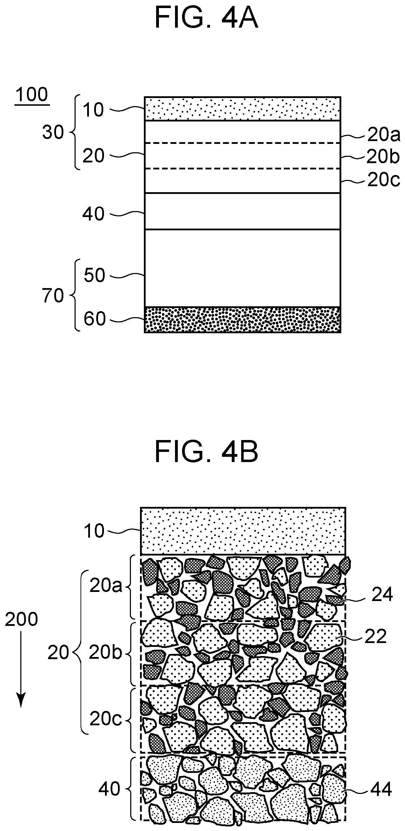

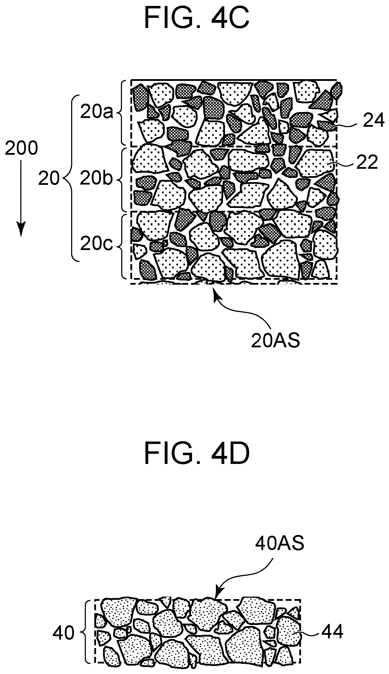

An electrolyte layer 40 containing a solid electrolyte according to the first embodiment and a secondary battery 100 including the electrolyte layer 40 will be described with reference to Figs. 4A and 4B.

Fig. 4A is a schematic cross-sectional view of the secondary battery 100 including the electrolyte layer in which the solid electrolyte of the present embodiment is used. The secondary battery 100 includes the electrolyte layer 40 on a surface of an anode active material layer 20 opposite the side on which an anode current collector layer 10 is in contact with the anode active material layer 20. The secondary battery 100 includes a cathode 70 on a side of the electrolyte layer 40 opposite the side on which the electrolyte layer 40 is in contact with the anode active material layer 20. The cathode 70 includes a cathode active material layer 50 on a surface of the electrolyte layer 40 opposite the surface in contact with the anode active material layer 20. The cathode 70 includes a cathode current collector layer 60 on a surface of the cathode active material layer 50 opposite the surface in contact with the electrolyte layer 40. In other words, the secondary battery 100 includes, in a lamination direction 200, the cathode 70, the electrolyte layer 40, and an anode 30.

### (Anode Active Material Layer)

As illustrated in Fig. 4B, the anode active material layer 20 in which the solid electrolyte of the present embodiment is used is in contact with the anode 30 including an anode current collector layer 10 and the anode active material layer 20 that contains active material particles 22 and an anode electrolyte 24. In the present specification, a structure configured to accept or release lithium ions (active material ions) to or from the electrolyte layer 40 is referred to as an anode; thus, the anode active material layer 20, which is a portion of the anode 30 excluding the anode current collector layer 10, may also be referred to as the anode 20, as illustrated in Fig. 4A. The anode active material layer 20 of the present embodiment contains the anode electrolyte 24 and thus may be referred to as a composite anode active material layer 20 or a composite anode structure 20.

The current collector layer 10 is a conductor that conducts electrons to or from an external circuit (not illustrated) and the active material layer. As the current collector layer 10, a self-supporting film of a metal, such as stainless steel (SUS) or aluminum, or a laminated structure of metal foil and a resin base is used.

The anode active material layer 20 includes anode active material layers 20a, 20b, and 20c as sublayers. The anode active material layers 20a, 20b, and 20c are distinguished by the unit of lamination in the layer thickness direction 200 before the active material particles 22 and the anode electrolyte 24 are sintered. The anode active material layers 20a, 20b, and 20c may have distributions in the layer thickness direction in terms of the volume fractions of the active material particles 22 and the anode electrolyte 24, a conductive assistant, which is not illustrated, and voidage (porosity). The layer thickness direction 200 is parallel or anti-parallel to the lamination direction in which the layers are laminated, and thus may also be referred to as the lamination direction 200.

The solid electrolyte according to the present embodiment is used for the anode electrolyte 24 in the anode active material layer 20.

### (Electrolyte Layer)

The anode electrolyte 24 and the solid electrolyte 44 in the electrolyte layer 40 may have the same composition and particle size distribution, or may have different compositions and particle size distributions. That is, the solid electrolyte according to the present embodiment may be used for the solid electrolyte 44 included in the electrolyte layer 40. Examples of a material other than the material of the first embodiment that is used for the solid electrolyte 44 of the electrolyte layer 40 include Li₃PO₄, Li₇La₃Zr₂O₁₂, Li_{0.33}La_{0.55}TiO₃, and Li_{1.5}Al_{0.5}Ge_{1.5}(PO₄)₃.

The amount of solid electrolyte of the present embodiment contained in the solid electrolyte 44 is preferably 25% or more by mass, more preferably 50% or more by mass, and still more preferably 75% or more by mass and 100% or less by mass.

The secondary battery of the present embodiment can be produced by a known method, for example, by lamination of an anode, a solid electrolyte, and a cathode, shaping, and heat treatment. The solid electrolyte of the present embodiment can be produced by heat treatment at a lower temperature than in the conventional technique. This reduces the formation of a high-resistance phase that exhibits high electrical resistance due to a reaction between the solid electrolyte and the electrode active material, thereby making it possible to obtain a secondary battery with excellent output characteristics. The "solid" used in the present specification includes an object having self-supporting properties to the extent that a certain shape and volume are maintained even if the posture of the object is changed. In other words, the object is not flowable and has a viscosity of less than 1 × 10⁷ cP (less than 1 × 10⁴ Pa·s).

### (Cathode Active Material Layer)

Similarly to the anode 30, the cathode active material layer 50 may have a structure in which both the cathode active material and the solid electrolyte are contained in the layer, or may be formed of a single-phase film composed of a cathode active material, such as metal Li or In-Li.

As the cathode active material, a metal, a metal fiber, a carbon material, an oxide, a nitride, silicon, a silicon compound, tin, a tin compound, any of various alloy materials, or the like is used. Among these, the cathode active material is preferably a metal, an oxide, a carbon material, silicon, a silicon compound, tin, a tin compound, or the like, from the viewpoint of capacity density. Examples of the metal used for the cathode active material include metal Li and In-Li. Examples of the oxide include Li₄Ti₅O₁₂ (lithium titanate: LTO). Examples of the carbon material used for the cathode active material include various natural graphites (graphites), coke, graphitizable carbon material undergoing graphitization, carbon fibers, spherical carbon, various artificial graphites, and amorphous carbon. Examples of the silicon compound used for the cathode active material include silicon-containing alloys, silicon-containing inorganic compounds, silicon-containing organic compounds, and solid solutions. Examples of the tin compound used for the cathode active material include SnO_{b} (0 < b < 2), SnO₂, SnSiO₃, Ni₂Sn₄, and Mg₂Sn. The cathode active material layer 50 may contain a conductive aid. Examples of the conductive assistant used for the cathode active material layer 50 include graphites, such as natural graphite and artificial graphite, carbon blacks, such as acetylene black, ketjen black, channel black, furnace black, lamp black, and thermal black, conductive fibers, such as carbon fibers, carbon nanotubes, and metal fibers, carbon fluoride, metal powders, such as aluminum, conductive metal oxides, such as conductive whiskers, e.g., zinc oxide, and titanium oxide, and organic conductive materials, such as phenylene dielectrics.

The secondary battery 100 in which the solid electrolyte according to the present embodiment is used for the anode electrolyte 24 of the composite anode active material layer 20 will be described below.

As illustrated in Fig. 4C, the anode 30 includes the solid electrolyte 24 of the present embodiment, the anode active material 22 configured to accept or release lithium ions to or from the solid electrolyte 24, and a surface 20AS where the solid electrolyte 24 and the anode active material 22 are arranged. In other words, the anode active material layer 20 includes the solid electrolyte 24 of the present embodiment, the anode active material 22 configured to accept or release lithium ions to or from the solid electrolyte 24, and the surface 20AS where the solid electrolyte 24 and the anode active material 22 are arranged. The electrolyte layer 40 of the present embodiment is a layer disposed in contact with the surface 20AS and configured to accept or release lithium ions to or from the anode 30. The secondary battery 100 includes the anode 30, the electrolyte layer 40 configured to be disposed in contact with the surface 20AS of the anode 30 and configured to accept or release lithium ions to or from the anode 30, and the cathode 70 in contact with the opposite surface of the electrolyte layer 40 from the side on which the electrolyte layer 40 is in contact with the surface 20AS.

The secondary battery 100 in which a solid electrolyte according to a modification of the present embodiment is used for the solid electrolyte 44 of the electrolyte layer 40 will be described below.

As illustrated in Fig. 4B, the electrolyte layer 40 according to the modification embodiment has a surface 40AS where the solid electrolyte of the first embodiment is arranged in a direction intersecting the layer thickness direction 200. The secondary battery 100 includes the electrolyte layer 40, the anode 30 configured to be disposed in contact with the surface 40AS and configured to accept or release lithium ions to or from the electrolyte layer 40, and the cathode 50 in contact with an opposite surface of the electrolyte layer 40 from the surface 40AS.

### EXAMPLES

An example of producing and evaluating a solid electrolyte of the present embodiment as a sintered body will be described. The present disclosure is not limited to the following examples.

### [Example 1]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.02}Yb_{0.98}Mg_{0.02}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Example 2]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), La₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.01}Yb_{0.891}La_{0.099}Mg_{0.01}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Examples 3 to 7]

### <Prebaking Step>

Prebaked bodies and prebaked powders were produced in the same process as in Example 1, except that the raw materials described in Example 2 were weighed in predetermined stoichiometric ratios such that R1 ratios, R2 ratios, and x had values given in Table 1.

### <Post Baking Step>

The pre-sintered powder prepared as described above was subjected to the same post baking step as in Example 1 to produce a sintered body.

### [Example 8]

### <Prebaking Step>

Li₃BO₃ (manufactured by Toshima Manufacturing Co., Ltd.), H₃BO₃ (manufactured by Kishida Chemical Co., Ltd.), Tm₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.02}Tm_{0.98}Mg_{0.02}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### [Example 9]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), Tm₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.01}Yb_{0.882}Tm_{0.098}Mg_{0.02}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Example 10]

### <Prebaking Step>

Li₃BO₃ (manufactured by Toshima Manufacturing Co., Ltd.), H₃BO₃ (manufactured by Kishida Chemical Co., Ltd.), Er₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.02}Er_{0.98}Mg_{0.02}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Example 11]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), Er₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.01}Yb_{0.882}Er_{0.098}Mg_{0.02}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Comparative Example 1]

### <Prebaking Step>

Li₃BO₃ (manufactured by Toshima Manufacturing Co., Ltd.), H₃BO₃ (manufactured by Kishida Chemical Co., Ltd.), and Yb₂O₃ (manufactured by Kojundo Chemical Laboratory Co., Ltd.) were provided as raw materials for a solid electrolyte. They were weighed in a predetermined stoichiometric ratio such that the composition after sintering was Li₆Yb(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Comparative Example 2]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), and La₂O₃ (manufactured by Kojundo Chemical Laboratory Co., Ltd.) were provided as raw materials for a solid electrolyte. They were weighed in a predetermined stoichiometric ratio such that the composition after sintering was Li₆Yb_{0.9}La_{0.1}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

### [Reference Example 1]

### <Prebaking Step>

Li₃BO₃ (manufactured by Toshima Manufacturing Co., Ltd.), H₃BO₃ (manufactured by Kishida Chemical Co., Ltd.), Yb₂O₃ (manufactured by Kojundo Chemical Laboratory Co., Ltd.), La₂O₃ (manufactured by Kojundo Chemical Laboratory Co., Ltd.), and MgO (manufactured by Kojundo Chemical Laboratory Co., Ltd.) were provided as raw materials for a solid electrolyte. They were weighed in a predetermined stoichiometric ratio such that the composition after sintering was Li_{6.4}Yb_{0.54}La_{0.06}Mg_{0.4}(BO₃)₃, and mixed with a mortar and pestle.

The mixed powder was then subjected to cold uniaxial molding using a hydraulic press SSP-10A manufactured by Shimadzu Corporation and heat treatment in an air atmosphere. The heating temperature was 650°C, and the holding time was 720 minutes.

The resulting prebaked body was ground with a mortar and pestle to prepare a prebaked powder.

### <Post Baking Step>

The prebaked powder prepared as described above was molded and heat-treated in the same manner as the prebaking, thereby producing a sintered body of Example 1. The heating temperature was 670°C, and the holding time was 720 minutes.

The sintered bodies of Examples 1 to 11, Comparative Examples 1 and 2, and Reference Example 1 were subjected to composition analysis and measurement of X-ray diffraction peaks by the above-described methods. The ionic conductivity was measured by the following method. A method for measuring the ionic conductivity will be described below.

### · Measurement of Ionic Conductivity

Gold electrodes were deposited on the top and bottom surfaces of each flat sintered body obtained by the post baking step using a magnetron sputtering system MSP-10, manufactured by Vacuum Device Co., Ltd., to produce a sample for AC impedance measurement.

A Potentiostat/Galvanostat SI 1287A and a Frequency Response Analyzer 1255b manufactured by Solartron Analytical were used for the AC impedance measurement. The measurement conditions were room temperature and a frequency of 1 MHz to 0.1 Hz.

The resistance of the sintered body was calculated from the complex impedance plot obtained by the impedance measurement. From the calculated resistance, the thickness of the sintered body, and the electrode area, the ionic conductivity was determined using the following equation. Ionic conductivity (S/cm) = thickness of sintered body (cm)/(resistance of sintered body (Ω) × electrode area (cm2))

### · Results

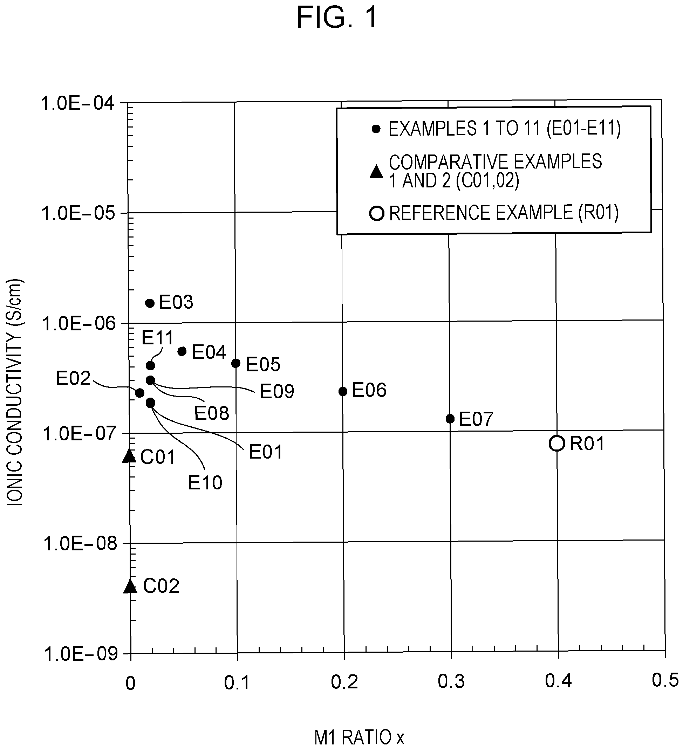

Table 1 presents the stoichiometric amounts of raw materials and the heating temperature during the post baking when the solid electrolytes according to Examples 1 to 11, Comparative Examples 1 and 2, and Reference Example 1 were produced, the diffraction peak positions, and the ionic conductivity, and the composition ratios [M1]/[R] of the substitution metals. Fig. 1 is a scatter plot illustrating the relationships between the ionic conductivities and the amounts x of substitution element M1 that substitutes for the element R of the solid electrolytes of First Examples 1 to 11.

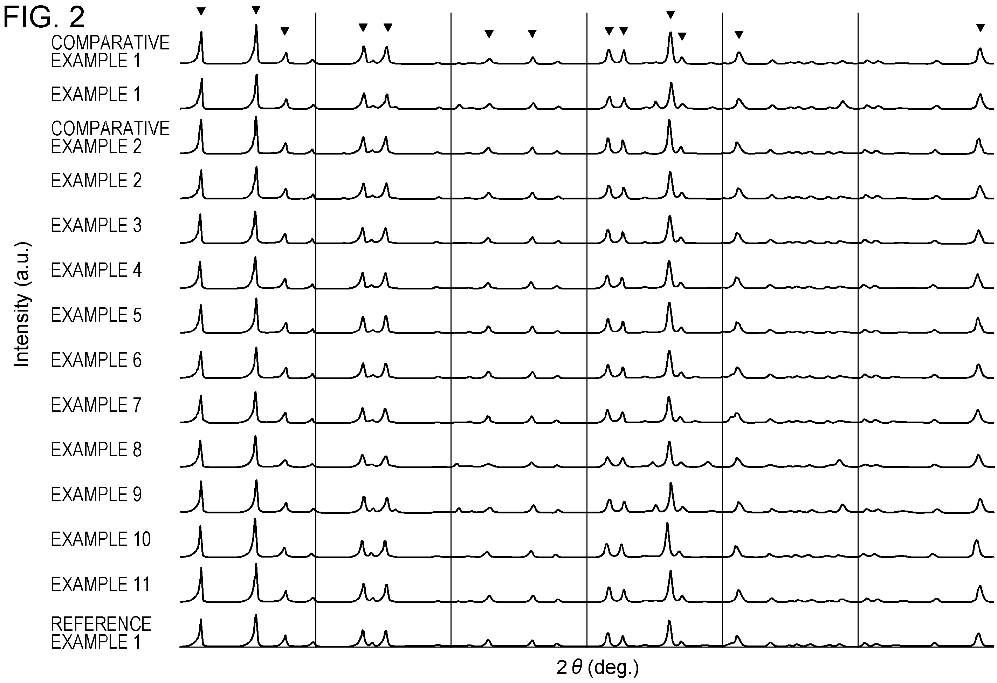

Fig. 2 illustrates diffraction curves obtained by XRD in the range of 2θ = 10° to 40°. It can be seen that the crystal structure in each of Examples 1 to 7 is a monoclinic crystal structure of the same type as Li₆Yb(BO₃)₃, the crystal structure in each of Examples 8 and 9 is a monoclinic crystal structure of the same type as Li₆Tm(BO₃)₃, and the crystal structure in each of Examples 10 and 11 is a monoclinic crystal structure of the same type as Li₆Er(BO₃)₃, which is the same type as Li₆Yb(BO₃)₃.

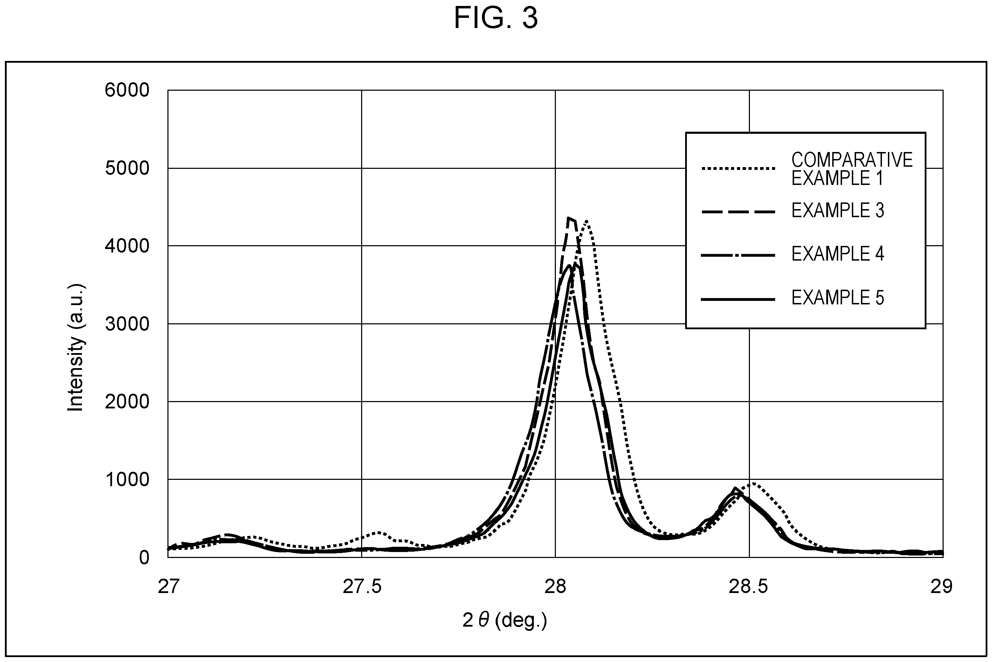

Fig. 3 illustrates diffraction curves obtained by XRD in the range of 2θ = 27° or more and 29° or less. It can be seen that in each of the solid electrolytes according to Examples 3 to 5 in which the ionic conductivity σ was 4 × 10⁻⁷ S/cm or more, the peak positions at about 2θ = 28.1° and about 28.5° are shifted to lower angles than the peak positions in Comparative Example 1. These are considered to be the changes of the X-ray diffraction profiles corresponding to the changes of the crystal structure caused by the substitution of at least one element selected from the group including M1 for at least part of Yb, which is a rare-earth element.

In each of the solid electrolytes according to Examples 1 to 11 in which the ionic conductivity σ was 1 × 10⁻⁷ S/cm or more, as presented in Table 1, a difference in the amount of shift between the high-angle peak and the low-angle peak of the bimodal diffraction angle peaks is observed with the shifts of the X-ray diffraction peaks. It can be read that in the case of a diffraction angle 2θ in the range of 27.9° or more and 28.6° or less, the difference 2θd in diffraction angle between a higher-angle diffraction peak observed at 28.3° to 29.0° and a lower-angle diffraction peak observed at 27.9° to 28.3° is increased to 0.43° or more. In each of the solid electrolytes according to Examples 1 to 11 in which the ionic conductivity σ was 1 × 10⁻⁷ S/cm or more, a difference 2θd in the diffraction angle of the bimodal diffraction angle peaks at an X-ray diffraction angle 2θ of 28.3° to 29.0° was 0.432° or more and 0.448° or less.

In other words, the solid electrolyte according to the present embodiment contains a solid electrolyte containing a borate that contains Li, an element R selected from a group including Yb, Er, Tm, and La, and an element M1 selected from a group including Mg. Furthermore, the solid electrolyte according to the present embodiment is, in other words, an electrolyte that exhibits two diffraction peaks in a diffraction angle 2θ range of 27.9° or more and 28.6° or less in XRD using the K-alpha emission line in copper, in which the difference 2θd in diffraction angle between the higher-angle diffraction peak and the lower-angle diffraction peak is 0.43° or more.

The two diffraction angle peaks observed in the diffraction angle 2θ range of 27.9° or more and 28.6° or less may further include multimodal peaks including trimodal or tetramodal peaks depending on the crystallinity. In the present specification, the two diffraction angle peaks are represented as having one peak on the lower angle side and one peak on the higher angle side, respectively, bordering a diffraction angle 2θ of 28.3°. In this way, the diffraction angle peaks are separated by fitting to a bimodal diffraction profile.

Such high-angle diffraction angle peaks are broadened and shift to higher angles more remarkably than low-angle diffraction angle peaks as the component of the substitution element M increases or as the ionic conductivity increases. From this, it can be read that the solid electrolyte 44 of the present embodiment has a crystal structure different from the non-substituted comparative examples, and that a plurality of crystal structures having a distribution in lattice spacing and crystallite size are mixed.

The solid electrolytes according to Examples 2 to 7, 9, and 11 described in Table 1 are different from the solid electrolytes according to Examples 1, 8, and 10 in that the rare-earth elements R are binary (Yb, Tm), (Yb, Er), and (Yb, La).

In the solid electrolytes having an ionic conductivity of 1E-7 (S/cm) or more according to Examples 1 to 11, the atomic concentration ratio [M1]/[R] of the substitution element M to the rare-earth element R was 0.020 or more and 0.429 or less. In the solid electrolytes having an ionic conductivity of 0.4E-6 (S/cm) or more according to Examples 3 to 5 and 11, the atomic concentration ratio [M1]/[R] of the substitution element M1 to the rare-earth element R was 0.020 or more and 0.111 or less.

**[Table 1]**

| | R1 | R2 | R1 ratio | R2 ratio | M1 | M1 ratio | Sintering temperature (°C) | Diffraction peak (°) | Difference in diffraction angle (°) | Ionic conductivity (S/cm) | [M1]/[R] |
|---|---|---|---|---|---|---|---|---|---|---|---|
| Comparative Example 1 | Yb | - | 1 | 0 | - | 0 | 670 | 28.065 | 0.419 | 6.3×10⁻⁸ | 0 |
| | | | | | | | | 28.486 | | | |
| Example 1 | Yb | - | 0.98 | 0 | Mg | 0.02 | 670 | 28.096 | 0.432 | 1.9×10⁻⁷ | 0.020 |
| | | | | | | | | 28.528 | | | |
| Comparative Example 2 | Yb | La | 0.9 | 0.1 | - | 0 | 670 | 28.048 | 0.416 | 4.1×10⁻⁹ | 0 |
| | | | | | | | | 28.464 | | | |
| Example 2 | Yb | La | 0.891 | 0.099 | Mg | 0.01 | 670 | 28.064 | 0.448 | 2.3×10⁻⁷ | 0.010 |
| | | | | | | | | 28.512 | | | |
| Example 3 | Yb | La | 0.882 | 0.098 | Mg | 0.02 | 670 | 28.048 | 0.432 | 1.5×10⁻⁶ | 0.020 |
| | | | | | | | | 28.48 | | | |
| Example 4 | Yb | La | 0.855 | 0.095 | Mg | 0.05 | 670 | 28.032 | 0.432 | 5.5×10⁻⁷ | 0.053 |
| | | | | | | | | 28.464 | | | |
| Example 5 | Yb | La | 0.81 | 0.09 | Mg | 0.10 | 670 | 28.032 | 0.432 | 4.3×10⁻⁷ | 0.111 |
| | | | | | | | | 28.464 | | | |
| Example 6 | Yb | La | 0.72 | 0.08 | Mg | 0.20 | 670 | 28.028 | 0.436 | 2.3×10⁻⁷ | 0.250 |
| | | | | | | | | 28.464 | | | |
| Example 7 | Yb | La | 0.63 | 0.07 | Mg | 0.30 | 670 | 28.016 | 0.432 | 1.3×10⁻⁷ | 0.429 |
| | | | | | | | | 28.448 | | | |
| Example 8 | Tm | - | 0.98 | 0 | Mg | 0.02 | 670 | 28.032 | 0.432 | 3.0×10⁻⁷ | 0.020 |
| | | | | | | | | 28.464 | | | |
| Example 9 | Yb | Tm | 0.882 | 0.098 | Mg | 0.02 | 670 | 28.096 | 0.448 | 3.0×10⁻⁷ | 0.020 |
| | | | | | | | | 28.544 | | | |
| Example 10 | Er | - | 0.98 | 0 | Mg | 0.02 | 670 | 27.968 | 0.432 | 1.9×10⁻⁷ | 0.020 |
| | | | | | | | | 28.400 | | | |
| Example 11 | Yb | Er | 0.882 | 0.098 | Mg | 0.02 | 670 | 28.080 | 0.432 | 4.1×10⁻⁷ | 0.020 |
| | | | | | | | | 28.512 | | | |
| Reference Example 1 | Yb | La | 0.54 | 0.06 | Mg | 0.40 | 670 | 28.048 | 0.432 | 7.6×10⁻⁸ | 0.667 |
| | | | | | | | | 28.464 | | | |

The present invention is not limited to the above-described embodiments, and various changes and modifications can be made without departing from the spirit and scope of the present invention. Therefore, the following claims are attached in order to make the scope of the present invention public.

This application claims priority based on Japanese Patent Application No. 2022-028467 filed February 25, 2022, which is hereby incorporated by reference herein in its entirety.

## Claims

1. A solid electrolyte, comprising an oxide represented by the general formula Li₆₊ₓR₁₋ₓM1ₓ(BO₃)₃,
wherein the formula, R is a rare-earth element selected from a group including Yb, Er, Tm, and La, M1 is a divalent element selected from a group including Mg, Sr, and Ca, and x is a real number satisfying 0 < x < 1.

2. The solid electrolyte according to Claim 1, wherein x satisfies 0.01 ≤ x ≤ 0.30.

3. The solid electrolyte according to Claim 1 or 2, wherein R includes Yb and La, and x satisfies 0.02 ≤ x ≤ 0.10.

4. A solid electrolyte, comprising a borate containing Li, an element R selected from a group including Yb, Er, Tm, and La, and an element M1 selected from a group including Mg, Sr, and Ca.

5. The solid electrolyte according to any one of Claims 1 to 4, wherein M1 is Mg.

6. The solid electrolyte according to any one of Claims 1 to 5, wherein the solid electrolyte exhibits two diffraction peaks in a diffraction angle range of 27.9° or more and 28.6° or less in an X-ray diffraction analysis by a 2θ method using a K-alpha emission line in copper, and a difference 2θd in diffraction angle between a higher-angle diffraction peak and a lower-angle diffraction peak is 0.43° or more.

7. The solid electrolyte according to Claim 6, wherein the difference 2θd in diffraction angle is 0.432° or more and 0.448° or less.

8. The solid electrolyte according to any one of Claims 1 to 7, wherein the atomic concentration ratio [M1]/[R] of the element M1 to the element R is 0.020 or more and 0.429 or less.

9. The solid electrolyte according to Claim 8, wherein the atomic concentration ratio [M1]/[R] is 0.020 or more and 0.111 or less.

10. The solid electrolyte according to any one of Claims 1 to 9, wherein the element R includes a plurality of rare-earth elements.

11. The solid electrolyte according to Claim 10, wherein the plurality of rare-earth elements include at least Yb.

12. An anode, comprising the solid electrolyte according to any one of Claims 1 to 11, an anode active material configured to accept or release lithium ions to or from the electrolyte, and a surface where the solid electrolyte and the active material are arranged.

13. A secondary battery, comprising the anode according to Claim 12, an electrolyte layer configured to be disposed in contact with the surface and configured to accept or release lithium ions to or from the anode, and a cathode in contact with an opposite surface of the electrolyte layer from a side on which the electrolyte layer is in contact with the surface.

14. An electrolyte layer, comprising a surface where the solid electrolyte according to any one of Claims 1 to 11 is arranged in a direction intersecting a layer thickness direction.

15. A secondary battery, comprising the electrolyte layer according to Claim 14, an anode configured to be disposed in contact with the surface and configured to accept or release lithium ions to or from the electrolyte layer, and a cathode in contact with an opposite surface of the electrolyte layer from the surface.
